# EUROPEAN PATENT APPLICATION

(11) **EP 1 000 538 A1**
(43) Date of publication of application: **17.05.2000**
(21) Application number: 98921499.4
(22) Date of filing: 29.05.1998
(51) Int. Cl.: A01K 11/00

(54) **EAR TAG ENABLING TO IDENTIFY CATTLE**

(71) Applicant: Norel, S.A., 28007 Madrid (ES)
(72) Inventor: PABLOS PEREZ, Enrique, E-28007 Madrid (ES)
(74) Representative: Perez Bonal, Bernardo
(86) International application number: ES9800153
(87) International publication number: WO9962330

(57) **Abstract**

The invention relates to an ear tag comprised of a single sheet (1) intended to identify cattle and masked on at least one of its faces, and incorporating a chip (1.3) with animal identification data. The sheet is traversed by a punch (2) configured by a rigid plastic rod terminated by an extreme point (2.1) with a flange (2,2) which also traverses the animal ear and is incorporated in a tubular flange of a disc (4) having a central perforation (4.2).

## Description

### OBJECT OF THE INVENTION

The invention disclosed relates to a cattle identification tag, from among the identification means which employ large sheets in the form of labels which incorporate fastening means.

The object of this invention is the specific adaptation of the tag for cattle identification, incorporating to this end a highly elastic plastic material sheet placed between a punch element with a large base and with an annular flange near said base, and a disc with a tubular cap at the end of said punch, with the plastic sheet having at least a manually marked identifier or an information bearing support.

### BACKGROUND OF THE INVENTION

Safety labels, with a large data display surface, are widely used identification elements, at least throughout the European Community, with an accepted usefulness and fully validated by organisms and private companies and users.

Despite the foregoing, its construction in a double sheet printed on both external faces, existence of a metallic tubular punch, the fact that it is applied on both ears and the difficulty of piercing the ear and simultaneously attaching the tag make it costly and of difficult, unsafe and troublesome application.

Another solution provided by Utility Model 8601535 relating to a "Device for Identification and Control of Cattle" presents the disadvantage of the small space available for including the identification symbols, specifically a small circular crown, so that the animal must be very near the person who is performing the identification, with the ensuing problems, particularly when said person is unknown to the animal bearing the tag.

The applicant is unaware of the existence of any tag bearing a large cattle identification label of the characteristics of the present invention.

### DESCRIPTION OF THE INVENTION

The invention object of the present memory relates to a cattle identification tag, belonging to the field of identification means in the form of large sheets in the form of labels incorporating fastening means, although in the present invention the identification means simply consists of a single identifying sheet; nevertheless, the information provided by the tag as a whole is not reduced.

This invention is characterised by its specific adaptation to cattle identification as a tag incorporating a large sheet made from a highly elastic plastic material, so that it may withstand large tension loads without ripping of its weakened perforated area, which is located in the center of a lateral extension.

This sheet is provided with a perforation which is crossed by a plastic punch in the form of a stem with a conical head, which crosses the animal's ear, and which is provided with a large base on the opposite end, so that the punch cannot be removed through the orifice in the animal's ear, as this orifice will tend to become larger over time due various causes, both natural and not.

Following this base and parallel to it, the punch is provided with an annular flange located as near to the base as the sheet thickness will allow, since this interdiscal space is provided for incorporating the edges of the aforementioned sheet..

The tag is also provided with a base disc of a similar diameter to the punch base and which on one of its faces is provided with an inscribed concentric tubular cap, with an orifice in which the punch is inserted through the conical head of its free end.

The large elastic sheet incorporates information on the animal which is marked manually, as a bar code, a chip, or whichever means of information support.

### DESCRIPTION OF THE DRAWINGS

As a complement of the description being made and in order to better understand the characteristics of the invention, as an integral part of the present descriptive memory is a set of drawings where for purposes of illustration and in a non-limiting way the following is shown:

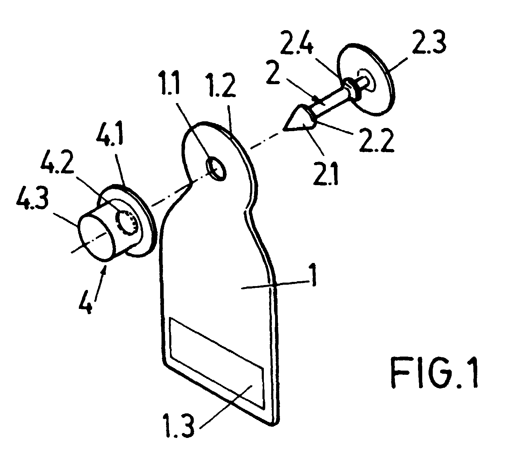

Figure 1 is an exploded view of the use of the invention in the preferred embodiment of the example, showing the three parts: the identification label and the other two end parts.

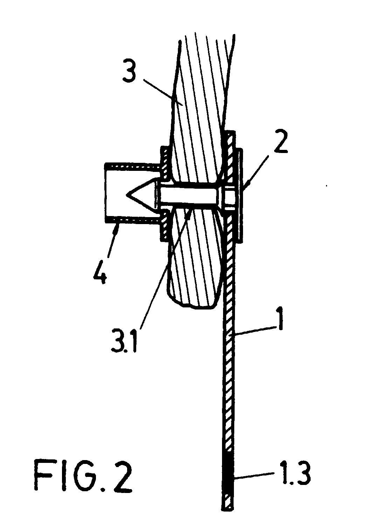

Figure 2 is a cross section of the tag of the invention fastened to the earlobe of an animal.

### PREFERRED EMBODIMENT OF THE INVENTION

In view of the above, the present invention relates to a cattle identification tag among sheet identification means, essentially characterised in that it comprises a single sheet (1) for identification of cattle, made from a plastic and absorbent material which may be marked on both faces, including with a permanent ink marker, constructed with great elasticity and provided with a perforation (1.1) in the center of a lateral extension (1.2).

Sheet (1) is mounted through its perforation (1.1) between a punch (2) comprising a rigid plastic stem with an end flange (2.2) ending in a conical head (2.1) which crosses perforation (3.1) of the animal's ear (3) and is provided with a large opposing base (2.3) which prevents the punch (2) from being removed from the ear; in addition the stem is provided with an annular flange (2.4) next to the base (2.3), between which sheet (1) is fastened.

Flange (2.2) of punch (2) rests on the inner face of base (4.1) of a disc (4) provided with a central orifice (4.2), disc (4) provided with a tubular cap (4.3) which receives the conical head (2.1) of punch (2).

Sheet (1) bears information in the form of a bar code, a chip (1.3) or any information support.

The description is not extended further in the understanding that any expert in the field would be capable of understanding the scope if the invention and the advantages derived thereof as well as to reproduce the same.

It is understood that as long as the essence of the invention is unchanged, variations in materials, shape, size and arrangement of the elements may vary within the same characterisation.

The terms used in the description and its meaning must be understood in a non-limiting manner.

## Claims

1. cattle identification tag, to be placed in an orifice (3.1) made in the animal's ear (3), essentially characterised in that it comprises a single sheet (1) made from a highly elastic plastic material which incorporates a chip (1.3) containing identification data of the animal.

2. Cattle identification tag as in claim 1, characterised in that the sheet is provided with a perforation (1.1) in the center of a lateral extension (1.2) to be placed on a punch (2), said punch (2) consisting of a rigid plastic stem with an end conical head (2.1) on a flange (2.2) which crosses perforation (3.1) of the animal's ear (3) and is provided with a very wide opposite base (2.3) which prevents punch (2) from being removed from the ear; in addition the stem is provided with an annular flange (2.4) near base (2.3) between which is held sheet (1), with flange (2.2) of punch (2) resting inside a base (4.1) of a disc (4) provided with a central orifice (4.2), said disc (4) provided with a tubular cap (4.3) which receives the conical head (2.1) of punch (2).

3. Cattle identification tag as in claim 1, characterised in that sheet (1) is made from an absorbent material in order to admit permanent ink from a marker.
